# FASCICULE DE BREVET EUROPEEN

(11) **EP 3 678 840 B1**
(45) Date de publication et mention de la délivrance du brevet: **07.07.2021**
(21) Numéro de dépôt: 18755830.9
(22) Date de dépôt: 22.08.2018
(51) Int. Cl.: B29C 49/42, B29C 49/06, B29L 31/00, B29K 67/00

(54) **DISPOSITIF DE PREHENSION D'UNE PREFORME DE RECIPIENT, QUI COMPREND UN EJECTEUR SERVANT D'OUTIL DE DEMONTAGE D'UN NEZ DE TOURNETTE**
VORRICHTUNG ZUM GREIFEN EINER BEHÄLTERVORFORM MIT EINEM ALS WERKZEUG WIRKENDEN AUSWERFER ZUM ENTFERNEN EINER SPINDELNASE
DEVICE FOR GRIPPING A CONTAINER PREFORM, COMPRISING AN EJECTOR ACTING AS A TOOL FOR REMOVING A SPINDLE NOSE

(30) Priorité: 08.09.2017 FR 1758318
(43) Date de publication de la demande: 15.07.2020
(73) Titulaire: Sidel Participations, 76930 Octeville-sur-Mer (FR)
(72) Inventeur: FEVRE, Sébastien, 76930 Octeville Sur Mer (FR); MORIN, Stéphane, 76930 Octeville Sur Mer (FR)
(74) Mandataire: Sidel Group
(86) Numéro de dépôt international: PCT/EP2018/072682
(87) Numéro de publication internationale: WO 2019/048239

(56) Documents cités:
- EP-A1- 2 976 207
- WO-A1-95/33616
- WO-A1-2014/135631
- WO-A1-2015/181738
- DE-A1-102012 106 245
- FR-A1- 2 957 904

## Description

L'invention a trait au transport des préformes de récipients, notamment en matière plastique tel que polytéréphtalate d'éthylène (PET). Une préforme comprend classiquement un corps cylindrique qui se termine par un fond hémisphérique, un col ouvert qui présente sa forme finale, et (en général) une collerette séparant le col du corps.

Dans une installation de fabrication de récipients, les préformes brutes d'injection sont ordinairement stockées en vrac dans un conteneur. Les préformes sont d'abord prélevées du conteneur, orientées et ordonnées en ligne pour être introduites dans une unité de conditionnement thermique (habituellement appelée « four ») équipée d'émetteurs infrarouge. Dans le four, les préformes sont portées à une température supérieure à leur température de transition vitreuse (laquelle est d'environ 80°C pour le PET).

Les préformes ainsi chauffées sont ensuite transférées vers une unité de formage équipée d'une pluralité de moules dans lesquels les préformes sont formées à l'empreinte des récipients par soufflage ou étirage soufflage.

Dans le four, les préformes sont convoyées au défilé au moyen d'une chaîne de transport comprenant une pluralité de maillons portant chacun un dispositif de préhension pour une préforme.

Un dispositif de préhension classique est décrit dans le brevet européen EP 0 935 572 (Sidel).

Un dispositif de préhension comprend ordinairement :
- Un support (solidaire d'un maillon et qui se présente généralement sous forme d'un fourreau) ;
- Un équipage mobile appelé « tournette », monté sur le support, et qui comprend :
   o Un mandrin monté en pivot glissant par rapport au support ;
   o Un nez de tournette fixé sur le mandrin de manière démontable ;
- Un éjecteur qui, dans une position de travail, est solidaire du support.

En fonctionnement, un pignon solidaire du mandrin engrène une crémaillère fixe, ce qui, par défilement de la chaîne portant le maillon sur lequel est monté la tournette, provoque la rotation de celle-ci, avec la préforme dans le col de laquelle le nez de tournette est emmanché.

Ainsi, la préforme emboîtée sur le nez de tournette est entraînée à la fois en translation et en rotation dans le four, ce qui permet sa pleine exposition au rayonnement des émetteurs infrarouge.

Une même installation doit pouvoir convenir à la fabrication de récipients de différents modèles, et notamment de différentes capacités. Un modèle donné de préforme peut convenir à plusieurs modèles de récipients, mais pas à tous. Aussi le four doit-il pouvoir assurer la chauffe de différents modèles de préformes.

Les préformes ne se distinguent pas seulement par les formes (et tailles) de leur corps : il arrive qu'elles aient des cols de diamètres différents.

On conçoit dont aisément qu'il est alors nécessaire de remplacer chaque nez de tournette par un autre, d'un diamètre adapté au nouveau modèle de préforme à chauffer.

Le nez de tournette est ordinairement fixé sur le mandrin au moyen d'une baïonnette. Cette baïonnette se présente couramment sous forme d'une rainure pratiquée dans le mandrin, dans laquelle s'engage une goupille solidaire du nez de tournette. Pour démonter le nez de tournette, il convient de désengager la goupille de la baïonnette.

Il est toutefois nécessaire, auparavant, de procéder à la dépose de l'éjecteur car il gêne l'accès à la partie du nez de tournette par laquelle celui-ci est fixé sur le mandrin. La dépose de l'éjecteur et du nez de tournette peut être automatisée, comme le suggère le brevet européen EP 2 976 207 (Sacmi) qui décrit un dispositif selon le préambule de la revendication 1.

Cependant la séquence totale des opérations nécessaires au démontage l'éjecteur demeure assez longue.

De fait, que le démontage de l'éjecteur soit ou non automatisée, le besoin persiste de le simplifier. Tel est l'objectif de l'invention.

A cet effet, il est proposé, en premier lieu, un dispositif de préhension d'une préforme de récipient, qui comprend :
- Un support ;
- Une tournette montée sur le support, et qui comprend :
   ∘ Un mandrin monté en pivot glissant par rapport au support ;
   ∘ Un nez de tournette fixé sur le mandrin de manière démontable, ce nez de tournette étant pourvu d'une empreinte ;
- Un éjecteur entourant au moins partiellement la tournette, cet éjecteur étant :
   o Apte à occuper une position de travail dans laquelle il est solidaire du support,
   o Pourvu d'une contre-empreinte complémentaire de l'empreinte du nez de tournette,
   o Démontable du support, et apte à occuper une position d'outillage dans laquelle sa contre-empreinte coopère avec l'empreinte du nez de tournette pour solidariser en rotation l'éjecteur et le nez de tournette.

Il est proposé en deuxième lieu, un procédé de démontage, dans un tel dispositif, du nez de tournette du mandrin, qui comprend les opérations suivantes (lesquelles peuvent être réalisées par un manipulateur automatisé) :
- Déplacer l'éjecteur de sa position de travail à sa position d'outillage pour le solidariser en rotation du nez de tournette ;
- Imprimer à l'éjecteur une rotation pour désolidariser le nez de tournette, au niveau de la baïonnette, du mandrin.

On voit par conséquent que l'éjecteur sert d'outil pour assurer le démontage du nez de tournette. Cela permet d'assurer ce démontage en une seule opération, qui regroupe le retrait de l'éjecteur avec celui du nez de tournette.

Diverses caractéristiques supplémentaires peuvent être prévues, seules ou en combinaison. Ainsi, par exemple :
- Le nez de tournette est fixé sur le mandrin par l'intermédiaire d'une baïonnette ;
- L'empreinte et la contre-empreinte sont formées chacune d'une ou plusieurs facettes ;
- L'empreinte sur le nez de tournette est formée par une paire de méplats tournés à l'opposé l'un de l'autre, la contre-empreinte sur l'éjecteur étant formée d'une paire de facettes tournées en regard l'une de l'autre ;
- Le dispositif comprend un système de fixation amovible de l'éjecteur sur le support ;
- Le système de fixation amovible comprend une baïonnette avec laquelle coopère une goupille ;
- La baïonnette est formée dans le support, et la goupille est portée par l'éjecteur ;
- L'éjecteur est monté sur le support avec un débattement angulaire, entre une position verrouillée bloquant la translation de l'éjecteur par rapport au support, et une position déverrouillée autorisant la translation de l'éjecteur par rapport au support ;
- Dans la position déverrouillée de l'éjecteur, chaque facette de sa contre-empreinte s'étend de manière coplanaire au méplat correspondant de l'empreinte du nez de tournette ;
- Le système de fixation amovible comprend au moins un aimant primaire porté par l'éjecteur et un aimant secondaire porté par le support, l'aimant primaire et l'aimant secondaire étant, en position verrouillée, au droit l'un de l'autre avec des pôles mutuellement attractifs en regard ;
- Le système de fixation amovible comprend au moins un aimant primaire porté par l'éjecteur et un aimant secondaire porté par le support, l'aimant primaire et l'aimant secondaire étant, en position déverrouillée, au droit l'un de l'autre avec des pôles mutuellement répulsifs en regard.

D'autres objets et avantages de l'invention apparaîtront à la lumière de la description d'un mode de réalisation, faite ci-après en référence aux dessins annexés dans lesquels :
- La **FIG.1** est une vue en perspective d'un dispositif de préhension d'une préforme de récipient, équipé d'un support, d'une tournette et d'un éjecteur ;
- La **FIG.2** est une vue en coupe du dispositif de préhension de la **FIG.1****,** selon le plan de coupe II-II ;
- La **FIG.3** est une vue en gros plan de l'éjecteur du dispositif de préhension de la **FIG.1** ;
- La **FIG.4** est une vue en plan de l'éjecteur de la **FIG.3** ;
- La **FIG.5** est une vue en coupe de l'éjecteur de la **FIG.4****,** suivant le plan de coupe V-V ;
- La **FIG.6** est une vue en perspective du dispositif de préhension, illustrant le démontage de l'éjecteur ;
- La **FIG.7** est une vue de détail en coupe dans le même plan que la **FIG.5****,** montrant la fixation de l'éjecteur sur le support ;
- La **FIG.8** est une vue similaire à la **FIG.7****,** illustrant le démontage de l'éjecteur ;
- La **FIG.9** est une vue en perspective du dispositif de préhension, similaire à la **FIG.6****,** et montrant l'éjecteur dans sa position d'outillage ;
- La **FIG.10** est une vue en perspective du dispositif de préhension de la **FIG.9****,** suivant un autre angle de vue ;
- La **FIG.11** est une vue en perspective du dispositif de préhension, similaire à la **FIG.10****,** montrant le démontage du nez de tournette au moyen de l'éjecteur ;
- La **FIG.12** est une vue en coupe transversale du dispositif de préhension de la **FIG.11****.**

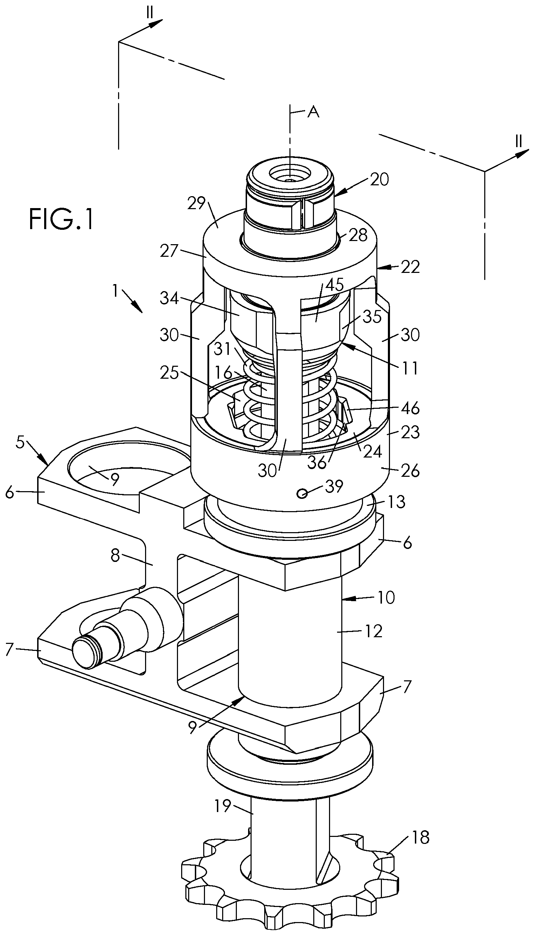

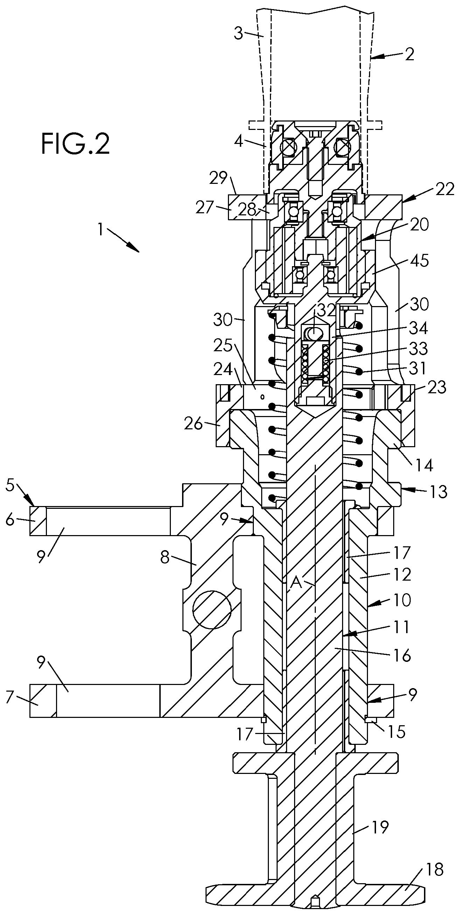

Sur la **FIG.1** et sur la **FIG.2** est représenté un dispositif **1** de préhension d'une préforme **2** de récipient.

La préforme **2,** partiellement visible en pointillés sur la **FIG.2****,** comprend, comme d'ordinaire, un corps **3** de forme sensiblement cylindrique, un col **4** qui s'ouvre à une première extrémité du corps **3,** et un fond hémisphérique (non visible ici pour des raisons de place) qui ferme le corps **3** à une autre extrémité, opposée au col **4.** La préforme **2** est par exemple en PET, bien que cette matière n'ait que peu d'importance dans le présent contexte.

Ce dispositif **1** comprend un maillon **5,** qui bien que représenté individuellement sur la **FIG.1** et sur la **FIG.2****,** est en fait intégré à une chaîne qui comprend une multitude de tels maillons **5.**

Le maillon **5,** de préférence métallique (par ex. en acier), comprend deux branches **6, 7** superposées, qui font saillie latéralement d'une âme **8.** Les branches **6, 7** sont percées d'alésages **9** coaxiaux qui définissent conjointement un axe **A** principal.

Le dispositif **1** comprend par ailleurs :
- Un fourreau **10,** qui est monté sur le maillon **5** en étant emmanché dans les alésages **9** coaxiaux, et
- Une tournette **11** montée sur ce fourreau **10** qui lui sert de support.

Selon un mode de réalisation, chaque maillon **5** est prévu pour porter deux tournettes **11.** A cet effet, et comme illustré sur les **FIG.1** et **FIG.2****,** les branches **6, 7** font saillie de part et d'autre de l'âme **8** de sorte à accueillir deux fourreaux **10** dans chacun desquels est montée une tournette **11.**

Les maillons **5** sont interconnectés par ex. au moyen d'attelage montés articulés sur les fourreaux **10,** de sorte à permettre au moins un degré de liberté en rotation (et de préférence même deux degrés de liberté en rotation) d'un maillon **5** par rapport à ses voisins.

Sur les **FIG.1** et **FIG.2****,** on a, par souci de simplification et de clarté, représenté un unique fourreau **10** et une unique tournette **11.**

Comme on le voit bien sur la **FIG.2****,** le fourreau **10** comprend un fût **12** cylindrique, qui s'étend entre les deux branches **6, 7** et se prolonge, à une extrémité, par une tête **13** élargie terminée par une collerette **14.**

Le fourreau **10** est monté de préférence sans jeu sur le maillon **5.** Le fourreau **10** est immobilisé axialement par rapport au maillon **5** par la tête **13,** qui vient s'appliquer contre une première branche **6,** et par un circlips **15** encliqueté sur le fût **12** à l'extérieur de la deuxième branche **7.**

La tournette **11** est un équipage mobile destiné à assurer la préhension d'une préforme **2** par son col **4,** et monté sur le maillon **5** (par l'intermédiaire du fourreau **10)** avec deux degrés de liberté : une translation suivant l'axe **A** principal ; une rotation autour de l'axe **A** principal. La structure et les mouvements de la tournette **11** sont détaillés ci-après.

La tournette **11** comprend, en premier lieu, un mandrin **16** monté en pivot glissant par rapport au fourreau **10,** autour (et, respectivement, suivant) l'axe **A** principal. Dans l'exemple illustré, la rotation et le glissement du mandrin **16** par rapport au fourreau **10** sont assurés par des paliers **17** lisses sous forme de douilles, éventuellement auto-lubrifiées.

Comme on le voit sur la **FIG.1****,** le mandrin **16** porte un pignon **18,** qui lui est solidaire en rotation. Le pignon **18** est avantageusement formé sur un embout **19** en forme de bobine, emmanché en force sur le mandrin **16.**

La tournette **11** comprend, en deuxième lieu, un nez **20** de tournette fixé sur le mandrin **16** de manière démontable, en l'espèce par l'intermédiaire d'une baïonnette **21** (mais il pourrait s'agir d'un autre type de système de fixation, par ex. par vis).

Le dispositif **1** de préhension comprend par ailleurs un éjecteur **22** qui entoure au moins partiellement la tournette **11.** Comme nous allons le voir, l'éjecteur **22** peut occuper plusieurs positions.

Dans une position de travail, illustrée sur la **FIG.1** et sur la **FIG.2****,** l'éjecteur **22** est monté sur le fourreau **10** en lui étant solidaire, à la fois en translation par rapport à l'axe **A** principal, et en rotation autour de celui-ci.

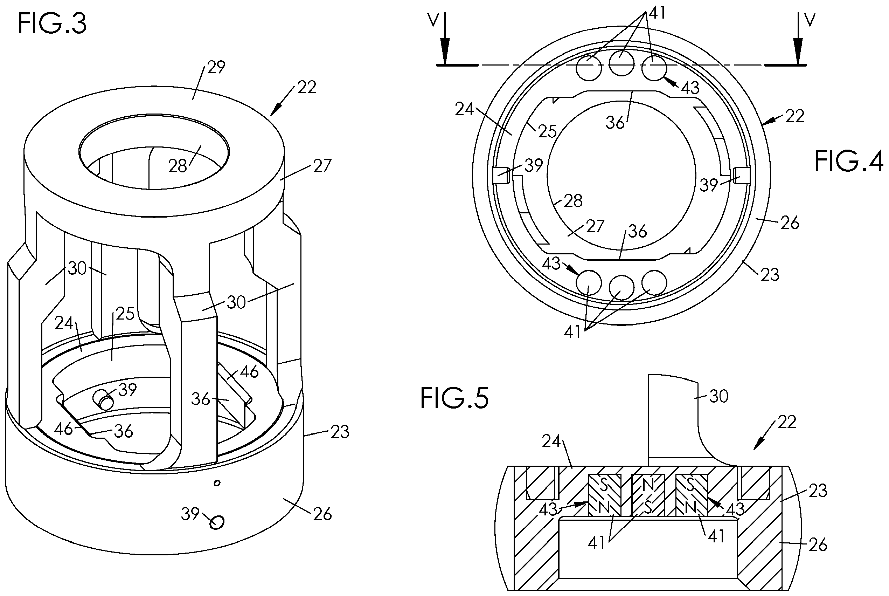

L'éjecteur **22,** bien visible sur la **FIG.3****,** comprend :
- Une embase **23** grossièrement cylindrique, qui inclut un disque **24** percé d'un trou **25** central, et une jupe **26** qui prolonge axialement le disque **24** à sa périphérie,
- Un plateau **27** percé d'un alésage **28** central et qui définit une face **29** terminale d'appui,
- Une série de pieds **30** (ici au nombre de quatre) qui relient l'embase **23** au plateau **27,** et qui définissent entre eux des ajours.

Dans la position de travail de l'éjecteur **22,** son embase **23** est emboîtée sur le fourreau **10,** la jupe **26** étant emmanchée sur la collerette **14.**

Comme nous l'avons déjà évoqué, la tournette **11** est montée en translation par rapport au fourreau **10** (et à l'éjecteur **22** dans sa position de travail) entre une position déployée, dans laquelle le nez **20** de tournette fait saillie de la face **29** terminale d'appui de l'éjecteur **22 (****FIG.1****,** **FIG.2****)** pour venir s'emmancher dans le col **4** d'une préforme **2** (opération dite de vêtissage), et une position rétractée dans laquelle le nez **20** de tournette est escamoté dans l'éjecteur **22,** en deçà de la face **29** terminale d'appui pour être extrait du col **4** de la préforme **2** tandis que celui-ci bute contre la face **29** terminale d'appui (opération dite de dévêtissage).

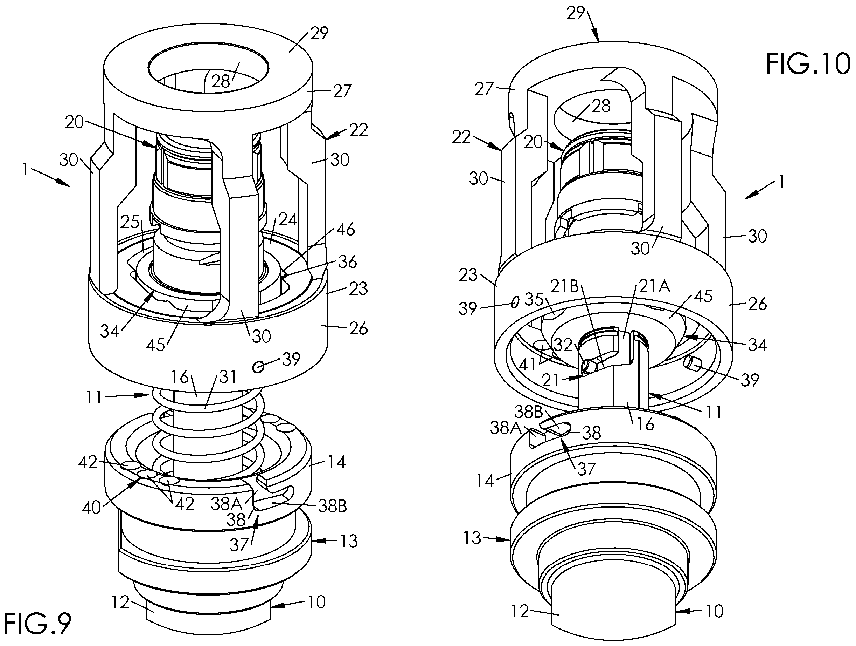

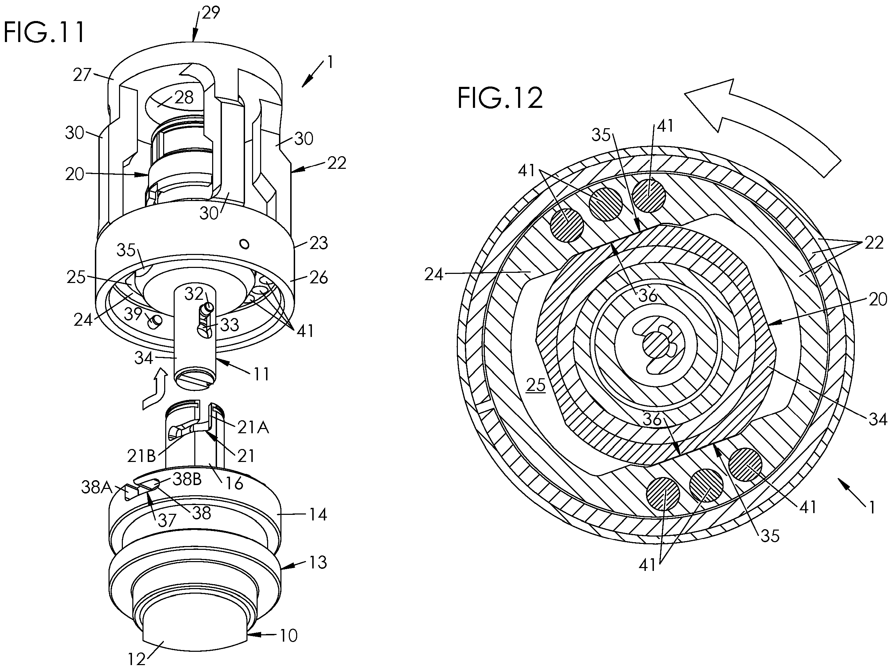

La translation de la tournette **11** est commandée par un poussoir (non représenté) qui vient s'engager dans l'embout **19** pour déplacer la tournette **11** de sa position déployée à sa position rétractée ou inversement, un ressort **31** de rappel (rendu invisible pour des raisons de clarté sur les **FIG.10** et **FIG.11**) étant intercalé entre le fourreau **10** et le mandrin **16** pour solliciter celui-ci en permanence vers la position déployée **(****FIG.2****).**

Comme déjà évoqué, la fixation du nez **20** de tournette sur le mandrin **16** est réalisée par l'intermédiaire d'une baïonnette **21.**

Selon un mode de réalisation illustré sur les **FIG.10** et **FIG.11****,** la baïonnette **21** est formée par une rainure coudée pratiquée à une extrémité du mandrin **16** (opposée au pignon **18).** Plus précisément, cette rainure comprend une section **21A** axiale, parallèle à l'axe **A** de rotation et débouchant sur l'extrémité du mandrin **16,** et une section **21B** transversale borgne.

De manière correspondante, le nez **20** de tournette porte une goupille **32** qui vient s'engager dans la baïonnette **21.** Comme illustré sur la **FIG.2****,** la goupille **32** est sollicitée élastiquement par un ressort **33** qui permet le rattrapage du jeu axial entre le nez **20** de tournette et le mandrin **16.** Le nez **20** de tournette se trouve immobilisé à la fois en translation et en rotation par rapport au mandrin **16** lorsque la goupille **32** est positionnée dans l'encoche **21.**

Dans l'exemple illustré, le nez **20** de tournette comprend un connecteur **34** par lequel il est fixé sur le mandrin **16** : c'est ce connecteur qui porte la (ou les) goupille(s) **32.**

Pour retirer le nez **20** de tournette du mandrin **16,** il convient d'immobiliser celui-ci en rotation et d'imprimer au nez **20** de tournette un mouvement de rotation suivi d'un mouvement de translation, comme indiqué par la flèche au centre de la **FIG.11**.

Comme nous allons le voir, l'éjecteur **22** est employé comme outil pour effectuer les opérations de démontage du nez **20** de tournette.

A cet effet, le nez **20** de tournette comprend une partie formée en écrou, et l'éjecteur **22** comprend une partie conformée en clé, complémentaire de cet écrou.

Autrement dit, le nez **20** de tournette et l'éjecteur **22** sont pourvus respectivement d'une empreinte **35** et d'une contre-empreinte **36** complémentaires. Lorsqu'elles coopèrent, cette empreinte **35** et cette contre-empreinte **36** assurent la solidarisation en rotation du nez **20** de tournette et de l'éjecteur **22.**

A cette fin, l'éjecteur **22** est démontable du fourreau **10,** pour pouvoir occuper une position dite d'outillage **(****FIG.9, FIG.10****,** **FIG.12****)** dans laquelle sa contre-empreinte **36** coopère avec l'empreinte **35** du nez de tournette de manière à solidariser en rotation l'éjecteur **22** et le nez **20** de tournette.

Pour cela, le dispositif **1** de préhension comprend un système **37** de fixation amovible de l'éjecteur **22** sur le fourreau **10.**

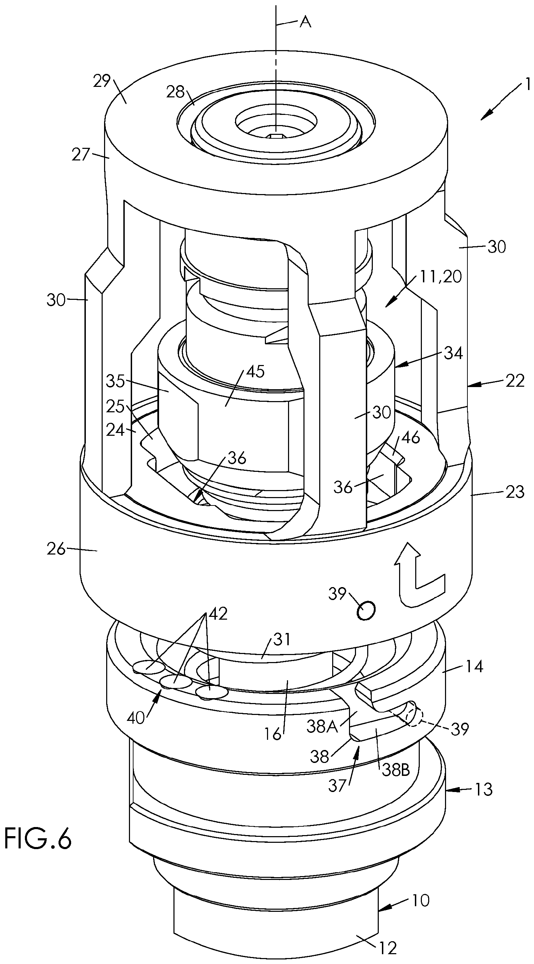

Selon un mode préféré de réalisation illustré sur la **FIG.6****,** ce système **37** de fixation amovible comprend une baïonnette **38** avec laquelle coopère une goupille **39.** Dans l'exemple illustré, la baïonnette **38** est formée dans le fourreau **10,** et la goupille **39** est portée par l'éjecteur **22.**

Plus précisément, la baïonnette **38** est formée par une rainure coudée pratiquée dans la collerette **14,** cette rainure comprenant une section **38A** axiale, parallèle à l'axe **A** principal et débouchant sur l'extrémité du fourreau **10,** et une section **38B** transversale borgne.

De manière correspondante, l'éjecteur **22** porte une goupille **39** qui fait saillie intérieurement de la jupe **26.**

Selon un mode de réalisation suggéré sur la **FIG.3****,** la baïonnette **38** est double, c'est-à-dire que le fourreau **10** comprend une paire de rainures identiques décalées angulairement de 180°, tandis que, de manière correspondante, l'éjecteur **22** comprend deux goupilles **39** diamétralement opposées.

Pour monter l'éjecteur **22** sur le fourreau **10,** on l'approche axialement en veillant à placer la (les) goupille(s) **39** au droit de la section **38A** droite de la (des) baïonnette(s) **38.** On enfonce alors complètement l'éjecteur **22** sur le fourreau **10** en emboîtant la jupe **26** sur la collerette **14,** puis on imprime à l'éjecteur **22** un mouvement de rotation autour de l'axe **A** principal jusqu'à ce que la (les) goupille(s) **39** parvienne au fond de la section **38B** transversale de la baïonnette **38.**

De la sorte, l'éjecteur **22** est monté sur le fourreau **10** (qui, comme nous l'avons vu, remplit une fonction de support pour la tournette 11) avec un débattement angulaire, entre :
- Une position verrouillée (adoptée, dans l'exemple illustré, lorsque la goupille **39** est au fond de la section **38B** transversale de la baïonnette **38),** qui bloque la translation de l'éjecteur **22** par rapport au fourreau **10,**
- Et une position déverrouillée (adoptée, dans l'exemple illustré, lorsque la goupille **39** est au droit de la section **38A** axiale de la baïonnette **38),** qui autorise la translation de l'éjecteur **22** par rapport au fourreau **10.**

Selon un mode préféré de réalisation illustré sur les **FIG.4** à **FIG.8****,** le système **37** de fixation amovible de l'éjecteur **22** intègre un verrou **40** magnétique, qui comprend au moins un aimant **41** primaire (ayant deux pôles opposés, respectivement N et S) porté par l'éjecteur **22** et un aimant **42** secondaire (ayant lui aussi deux pôles opposés, respectivement N et S) porté par le fourreau **10.**

Les aimants **41, 42** sont agencés pour, en position verrouillée de l'éjecteur **22,** être accouplés, c'est-à-dire se trouver au droit (et au contact) l'un de l'autre avec des pôles mutuellement attractifs (par ex. le pôle N de l'aimant **41** primaire et le pôle S de l'aimant **42** secondaire, ou le pôle S de l'aimant **41** primaire et le pôle N de l'aimant **42** secondaire) en regard.

En pratique, l'aimant **41** primaire se présente par ex. sous forme d'un barreau ou d'une pastille magnétique logé(e) dans un trou **43** débouchant complémentaire pratiqué dans la jupe **26** de l'éjecteur **22.** Quant à l'aimant **42** secondaire, il se présente par ex., lui aussi, sous forme d'un barreau ou d'une pastille magnétique logé(e) dans un trou **44** débouchant complémentaire pratiqué dans la collerette **14** du fourreau **10.** Le positionnement des trous **43, 44** est choisi pour qu'ils soient alignés lorsque l'électeur **22** est placé dans sa position de verrouillage.

Les aimants **41, 42** sont avantageusement de type Néodyme-Fer-Bore (NdFeB), qui présentent une densité d'énergie magnétique forte et durable.

Ces aimants **41, 42** contribuent à maintenir l'éjecteur **22** dans sa position verrouillée, compte tenu du couple important qu'il est nécessaire d'imprimer à l'éjecteur **22** pour désaligner les aimants **41, 42** ainsi accouplés.

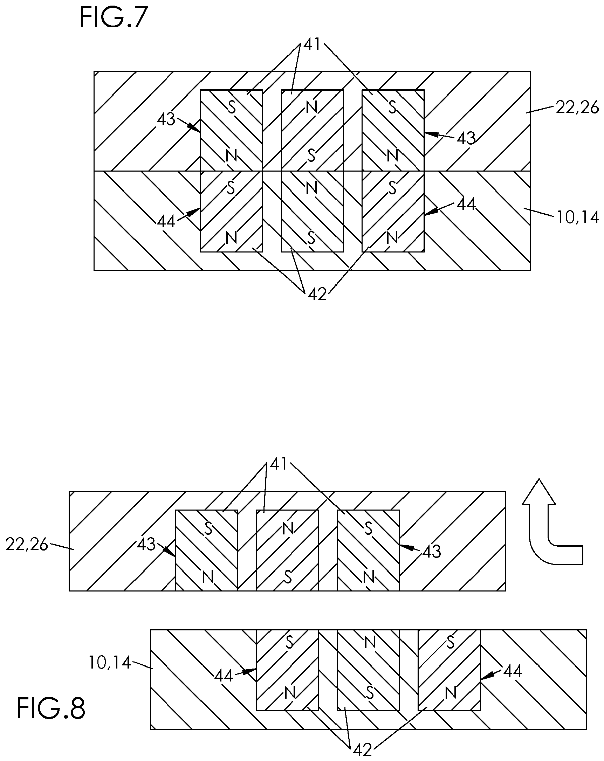

Selon un mode de réalisation illustré sur la **FIG.8****,** le système **37** de fixation amovible comprend au moins un aimant **41** primaire porté par l'éjecteur **22** et un aimant **42** secondaire porté par le fourreau **10,** agencés de manière telle que l'aimant **41** primaire et l'aimant **42** secondaire sont, en position déverrouillée de l'éjecteur **22,** au droit l'un de l'autre avec des pôles mutuellement répulsifs (par ex. le pôle N de l'aimant **41** primaire et le pôle N de l'aimant **42** secondaire, ou le pôle S de l'aimant **41** primaire et le pôle S de l'aimant **42** secondaire) en regard.

De la sorte, les forces magnétiques répulsives contribuent à écarter l'éjecteur **22** du fourreau **10,** ce qui facilite son démontage.

Dans l'exemple illustré sur les **FIG.4,** à **FIG.8****,** le verrou **40** magnétique comprend plusieurs aimants **41** primaires (ici au nombre de trois) portés par l'éjecteur **22,** et, de manière correspondante, plusieurs (ici également au nombre de trois) aimants **42** secondaires portés par le fourreau **10,** qui sont agencés pour que :
- En position verrouillée de l'éjecteur **22 (****FIG.7****),** chaque aimant **41** primaire soit en regard et au contact d'un aimant **42** secondaire de polarité inverse (c'est-à-dire que l'aimant **41** primaire présente son pôle S au pôle N de l'aimant **42** secondaire, ou de manière équivalente l'aimant **41** primaire présente son pôle N au pôle S de l'aimant **42** secondaire) ;
- En position déverrouillée de l'éjecteur **22,** au moins un (deux dans l'exemple illustré sur la **FIG.8****)** aimant **41** primaire soit en regard d'un aimant **42** secondaire de même polarité (c'est-à-dire que l'aimant **41** primaire présente son pôle S au pôle S de l'aimant **42** secondaire, ou de manière équivalente l'aimant **41** primaire présente son pôle N au pôle N de l'aimant **42** secondaire).

La multiplicité des aimants **41, 42** accroit, en position verrouillée, le couple nécessaire au déverrouillage de l'éjecteur **22** et, en position déverrouillée, augmente l'effort de répulsion exercé par le fourreau **10** sur l'éjecteur **22,** ce qui en facilite le retrait.

L'empreinte **35** et la contre-empreinte **36** sont agencées pour être alignées lorsque l'éjecteur **22** est en position déverrouillée, de sorte qu'il suffit d'exercer sur lui une traction axiale pour faire coopérer la contre-empreinte **36** avec l'empreinte **35.**

Selon un mode de réalisation, l'empreinte **35** et la contre-empreinte **36** sont formées chacune d'au moins une (et de préférence de plusieurs) facettes.

Plus précisément, dans l'exemple illustré, l'empreinte **35** sur le nez **20** de tournette est formée par une paire de méplats tournés à l'opposé l'un de l'autre, et la contre-empreinte **36** sur l'éjecteur **22** est formée par une paire de facettes tournées en regard l'une de l'autre.

Dans l'exemple illustré sur la **FIG.6****,** les méplats formant l'empreinte **35** sont portés par une partie **45** conformée en écrou du connecteur **34** du nez **20** de tournette, par lequel celui-ci est fixé (de manière amovible) sur le mandrin **16.**

Par ailleurs, dans l'exemple illustré, les facettes de la contre-empreinte **36** sont formées par deux bords opposés du trou **25** central pratiqué dans le disque **24** de l'embase **23** de l'éjecteur **22.** L'écartement entre les bords du trou **25** formant la contre-empreinte **36** est légèrement supérieur, pour permettre un jeu nécessaire à leur coopération mutuelle, à l'écartement entre les méplats formant l'empreinte **35.** Ce jeu est cependant trop faible pour être visible sur la **FIG.12****.**

Comme illustré sur la **FIG.6****,** chaque facette de la contre-empreinte **36** est avantageusement bordée d'un chanfrein **46** destiné à faciliter l'emboîtement de la contre-empreinte **36** de l'éjecteur **22** sur l'empreinte **35** du nez **20** de tournette.

Pour procéder au démontage du nez **20** de tournette du mandrin **16,** on effectue les opérations suivantes, partant de la configuration (illustrée sur les **FIG.1** et **FIG.2****)** dans laquelle le nez **20** de tournette est fixé sur le mandrin **16** et l'éjecteur **22** est dans sa position de travail, verrouillé sur le fourreau **10** :
- On déplace l'éjecteur **22** de sa position de travail à sa position d'outillage pour le solidariser en rotation du nez **20** de tournette, puis
- On imprime à l'éjecteur **22** une rotation pour désolidariser le nez **20** de tournette, au niveau de la baïonnette **21,** du mandrin **16.**

Dans l'exemple illustré, pour déplacer l'éjecteur **22** de sa position de travail à sa position d'outillage, on commence par déplacer l'éjecteur **22** de sa position verrouillée (dans laquelle il est éventuellement maintenu par le verrou **40** magnétique) à sa position déverrouillée.

Dans la position déverrouillée de l'éjecteur **22,** chaque facette de sa contre-empreinte **36** s'étend de manière coplanaire au méplat correspondant de l'empreinte **35** du nez **20** de tournette.

Il suffit ensuite de faire coulisser l'éjecteur **22** pour venir emboîter les facettes de la contre-empreinte **36** sur les méplats correspondants de l'empreinte **35,** c'est-à-dire pour faire coopérer la contre-empreinte **36** avec l'empreinte **35.** Dans cette position d'outillage, toute rotation imprimée à l'éjecteur **22** (dans le seul sens autorisé par la baïonnette **21)** se transmet au nez **20** de tournette.

Il est à noter que ces opérations peuvent être réalisées par un manipulateur automatisé, pourvu d'un outil adéquat permettant de venir saisir l'éjecteur **22** pour lui imprimer les mouvements de rotation et de translation ci-dessus évoqués.

L'éjecteur **22** et le nez **20** de tournette sont ainsi retirés d'un bloc, respectivement du fourreau **10** et du mandrin **16,** lesquels demeurent sur le maillon **5.**

L'éjecteur **22** et le nez **20** de tournette, qui demeurent accouplés, sont par ex. remisés dans un magasin, et un autre couple éjecteur **22-**nez **20** de tournette y est prélevé pour être monté, par une procédure inverse du démontage décrit ci-dessus, sur le mandrin **16** et le fourreau **10** préalablement dénudés par la procédure de démontage précédente.

On voit que l'utilisation de l'éjecteur **22** comme outil servant au démontage (ou, à l'inverse, au remontage) du nez **20** de tournette permet de simplifier - et d'accélérer le remplacement de celui-ci, puisque son retrait est effectué en une seule opération - comprenant, certes, plusieurs mouvements combinés de rotation et de translation. Le remplacement du nez **20** de tournette peut aisément être automatisé, au bénéfice d'une optimisation de la production, dont le temps d'arrêt est minimisé.

## Revendications

1. Dispositif **(1)** de préhension d'une préforme de récipient, qui comprend :
- Un support **(10)** ;
- Une tournette **(11)** montée sur le support **(10),** et qui comprend :
∘ Un mandrin **(16)** monté en pivot glissant par rapport au support **(10)** ;
∘ Un nez **(20)** de tournette fixé sur le mandrin **(16)** de manière démontable ;
- Un éjecteur **(22)** entourant au moins partiellement la tournette **(11),** cet éjecteur **(22)** étant apte à occuper une position de travail dans laquelle il est solidaire du support **(10)** ;
Ce dispositif **(1)** étant **caractérisé en ce que** :
- Le nez **(20)** de tournette et l'éjecteur **(22)** sont pourvus respectivement d'une empreinte **(35)** et d'une contre-empreinte **(36)** complémentaires,
- L'éjecteur **(22)** est démontable du support **(10),** et apte à occuper une position d'outillage dans laquelle sa contre-empreinte **(36)** coopère avec l'empreinte **(35)** du nez de tournette pour solidariser en rotation l'éjecteur **(22)** et le nez **(20)** de tournette.

2. Dispositif **(1)** selon la revendication 1, **caractérisé en ce que** le nez **(20)** de tournette est monté fixé sur le mandrin **(16)** par l'intermédiaire d'une baïonnette **(21).**

3. Dispositif **(1)** selon la revendication 1 ou la revendication 2, **caractérisé en ce que** l'empreinte **(35)** et la contre-empreinte **(36)** sont formées chacune d'une ou plusieurs facettes.

4. Dispositif (1) selon la revendication 3, **caractérisée en ce que** l'empreinte **(35)** sur le nez **(20)** de tournette est formée par au moins une paire de méplats tournés à l'opposé l'un de l'autre, la contre-empreinte **(36)** sur l'éjecteur **(22)** étant formée par au moins une paire de facettes tournées en regard l'une de l'autre.

5. Dispositif **(1)** selon l'une des revendications précédentes, **caractérisé en ce qu'**il comprend un système **(37)** de fixation amovible de l'éjecteur **(22)** sur le support **(10).**

6. Dispositif **(1)** selon la revendication 5, **caractérisé en ce que** le système **(37)** de fixation amovible comprend une baïonnette **(38)** avec laquelle coopère une goupille **(39).**

7. Dispositif **(1)** de fixation selon la revendication 6, **caractérisé en ce que** la baïonnette **(38)** est formée dans le support **(10),** et la goupille **(39)** est portée par l'éjecteur **(22).**

8. Dispositif **(1)** selon l'une des revendications 5 à 7, **caractérisé en ce que** l'éjecteur **(22)** est monté sur le support avec un débattement angulaire, entre une position verrouillée bloquant la translation de l'éjecteur **(22)** par rapport au support **(10),** et une position déverrouillée autorisant la translation de l'éjecteur **(22)** par rapport au support **(10).**

9. Dispositif **(1)** selon la revendication 3 ou la revendication 4, prise en combinaison avec la revendication 8, **caractérisé en ce que**, dans la position déverrouillée de l'éjecteur **(22),** chaque facette de sa contre-empreinte **(36)** s'étend de manière coplanaire au méplat correspondant de l'empreinte **(35)** du nez **(20)** de tournette.

10. Dispositif **(1)** selon la revendication 8 ou la revendication 9, **caractérisé en ce que** le système **(37)** de fixation amovible comprend au moins un aimant **(41)** primaire porté par l'éjecteur **(22)** et un aimant **(42)** secondaire porté par le support **(10),** l'aimant **(41)** primaire et l'aimant **(42)** secondaire étant, en position verrouillée, au droit l'un de l'autre avec des pôles mutuellement attractifs en regard.

11. Dispositif **(1)** selon l'une des revendications 8 à 10, **caractérisé en ce que** le système **(37)** de fixation amovible comprend au moins un aimant **(41)** primaire porté par l'éjecteur **(22)** et un aimant **(42)** secondaire porté par le support **(10),** l'aimant **(41)** primaire et l'aimant **(42)** secondaire étant, en position déverrouillée, au droit l'un de l'autre avec des pôles mutuellement répulsifs en regard.

12. Procédé de démontage, dans un dispositif **(1)** selon l'une des revendications précédentes, du nez **(20)** de tournette du mandrin **(16),** qui comprend les opérations suivantes :
- Déplacer l'éjecteur **(22)** de sa position de travail à sa position d'outillage pour le solidariser en rotation du nez **(20)** de tournette ;
- Imprimer à l'éjecteur **(22)** une rotation pour désolidariser le nez **(20)** de tournette, au niveau de la baïonnette **(21),** du mandrin **(16).**

13. Procédé selon la revendication 12, **caractérisé en ce que** les opérations sont réalisées au moyen d'un manipulateur automatisé.

## Patentansprüche

1. Vorrichtung (1) zum Ergreifen eines Behältervorformlings, die Folgendes umfasst:
- eine Stütze (10),
- eine auf der Stütze (10) montierte Schleudervorrichtung (11), die Folgendes umfasst:
o einen Dorn (16), der so montiert ist, dass er bezüglich der Stütze (10) schwenkt und gleitet,
o eine Schleudervorrichtungsspitze (20), die abmontierbar an dem Dorn (16) befestigt ist,
- einen Auswerfer (22), der die Schleudervorrichtung (11) mindestens teilweise umgibt, wobei der Auswerfer (22) eine Arbeitsposition einnehmen kann, in der er fest mit der Stütze (10) verbunden ist,
wobei diese Vorrichtung (1) **dadurch gekennzeichnet ist, dass**:
- die Schleudervorrichtungsspitze (20) und der Auswerfer (22) jeweils mit einer Einarbeitung (35) und einer Gegeneinarbeitung (36) versehen sind, die komplementär sind,
- der Auswerfer (22) von der Stütze (10) abmontierbar ist und eine Werkzeugbereitstellungsposition einnehmen kann, in der seine Gegeneinarbeitung (36) mit der Einarbeitung (35) der Schleudervorrichtungsspitze zusammenwirkt, um den Auswerfer (22) und die Schleudervorrichtungsspitze (20) drehfest miteinander zu verbinden.

2. Vorrichtung (1) nach Anspruch 1, **dadurch gekennzeichnet, dass** die Schleudervorrichtungsspitze (20) mittels einer Bajonetthalterung (21) fest an dem Dorn (16) montiert ist.

3. Vorrichtung (1) nach Anspruch 1 oder Anspruch 2, **dadurch gekennzeichnet, dass** die Einarbeitung (35) und die Gegeneinarbeitung (36) jeweils aus einer oder mehreren Facetten gebildet sind.

4. Vorrichtung (1) nach Anspruch 3, **dadurch gekennzeichnet, dass** die Einarbeitung (35) an der Schleudervorrichtungsspitze (20) durch mindestens ein Paar Abflachungen gebildet ist, die voneinander weg gewandt sind, wobei die Gegeneinarbeitung (36) an dem Auswerfer (22) durch mindestens ein Paar Facetten gebildet ist, die einander zugewandt sind.

5. Vorrichtung (1) nach einem der vorhergehenden Ansprüche, **dadurch gekennzeichnet, dass** sie ein System (37) zur entfernbaren Befestigung des Auswerfers (22) an der Stütze (10) umfasst.

6. Vorrichtung (1) nach Anspruch 5, **dadurch gekennzeichnet, dass** das System (37) zur entfernbaren Befestigung eine Bajonetthalterung (38) umfasst, mit der ein Stift (39) zusammenwirkt.

7. Vorrichtung (1) nach Anspruch 6, **dadurch gekennzeichnet, dass** die Bajonetthalterung (38) in der Stütze (10) gebildet ist und der Stift (39) von dem Auswerfer (22) getragen wird.

8. Vorrichtung (1) nach einem der Ansprüche 5 bis 7, **dadurch gekennzeichnet, dass** der Auswerfer (22) mit einem winkelförmigen Spielraum zwischen einer verriegelten Position, in der die Translation des Auswerfers (22) bezüglich der Stütze (10) blockiert ist, und einer entriegelten Position, in der die Translation des Auswerfers (22) bezüglich der Stütze (10) gestattet ist, an der Stütze montiert ist.

9. Vorrichtung (1) nach Anspruch 3 oder Anspruch 4, in Kombination mit Anspruch 8, **dadurch gekennzeichnet, dass** sich jede Facette der Gegeneinarbeitung (36) des Auswerfers (22) in dessen entriegelter Position koplanar zu der entsprechenden Abflachung der Einarbeitung (35) der Schleudervorrichtungsspitze (20) erstreckt.

10. Vorrichtung (1) nach Anspruch 8 oder Anspruch 9, **dadurch gekennzeichnet, dass** das System (37) zur entfernbaren Befestigung mindestens einen von dem Auswerfer (22) getragenen primären Magneten (41) und einen von der Stütze (10) getragenen sekundären Magneten (42) umfasst, wobei der primäre Magnet (41) und der sekundäre Magnet (42) in der verriegelten Position mit einander zugewandten, sich gegenseitig anziehenden Polen auf einer Linie zueinander liegen.

11. Vorrichtung (1) nach einem der Ansprüche 8 bis 10, **dadurch gekennzeichnet, dass** das System (37) zur entfernbaren Befestigung mindestens einen von dem Auswerfer (22) getragenen primären Magneten (41) und einen von der Stütze (10) getragenen sekundären Magneten (42) umfasst, wobei der primäre Magnet (41) und der sekundäre Magnet (42) in der entriegelten Position mit einander zugewandten, sich gegenseitig abstoßenden Polen auf einer Linie zueinander liegen.

12. Verfahren zum Abmontieren der Schleudervorrichtungsspitze (20) von dem Dorn (16) in einer Vorrichtung (1) nach einem der vorhergehenden Ansprüche, das die folgenden Vorgänge umfasst:
- Bewegen des Auswerfers (22) aus seiner Arbeitsposition in seine Werkzeugbereitstellungsposition, um ihn drehfest mit der Schleudervorrichtungsspitze (20) zu verbinden,
- Beaufschlagen des Auswerfers (22) mit einer Drehung, um die Schleudervorrichtungsspitze (20) an der Bajonetthalterung (21) von dem Dorn (16) zu lösen.

13. Verfahren nach Anspruch 12, **dadurch gekennzeichnet, dass** die Vorgänge mittels eines Handhabungsautomaten ausgeführt werden.

## Claims

1. Device **(1)** for gripping a container preform, which comprises:
- a base **(10);**
- a spinner **(11)** which is mounted on the base **(10)** and which comprises:
o a spindle **(16)** mounted so as to slide and pivot relative to the base **(10);**
o a spinner tip **(20)** removably fixed on the spindle **(16) ;**
- an ejector **(22)** at least partially surrounding the spinner **(11),** this ejector **(22)** being able to occupy a working position in which it is secured to the base **(10)** ;
this device **(1)** being **characterized in that**:
- the spinner tip **(20)** and the ejector **(22)** are respectively provided with an imprint **(35)** and a counter-imprint **(36)** that are complementary,
- the ejector **(22)** can be removed from the base **(10),** and is able to occupy a tooling position in which its counter-imprint **(36)** cooperates with the imprint **(35)** of the spinner tip to secure in rotation the ejector **(22)** and the spinner tip **(20).**

2. Device **(1)** according to Claim 1, **characterized in that** the spinner tip **(20)** is mounted fixed on the spindle **(16)** by means of a bayonet mount **(21).**

3. Device **(1)** according to Claim 1 or Claim 2, **characterized in that** the imprint **(35)** and the counter-imprint **(36)** are each formed from one or more facets.

4. Device **(1)** according to Claim 3, **characterized in that** the imprint **(35)** on the spinner tip **(20)** is formed by at least one pair of flats facing away from one another, the counter-imprint **(36)** on the ejector **(22)** being formed by at least one pair of facets facing toward one another.

5. Device **(1)** according to one of the preceding claims, **characterized in that** it comprises a system **(37)** for removable fixing of the ejector **(22)** on the base **(10).**

6. Device **(1)** according to Claim 5, **characterized in that** the removable fixing system **(37)** comprises a bayonet mount **(38)** with which a pin **(39)** cooperates.

7. Fixing device **(1)** according to Claim 6, **characterized in that** the bayonet mount **(38)** is formed in the base **(10),** and the pin **(39)** is borne by the ejector **(22)** .

8. Device **(1)** according to one of Claims 5 to 7, **characterized in that** the ejector **(22)** is mounted on the base with an angular play, between a locked position preventing the ejector **(22)** from moving in translation relative to the base **(10),** and an unlocked position allowing the ejector **(22)** to move in translation relative to the base **(10).**

9. Device **(1)** according to Claim 3 or Claim 4, considered in combination with Claim 8, **characterized in that**, in the unlocked position of the ejector **(22),** each facet of its counter-imprint **(36)** extends in a manner coplanar with the corresponding flat of the imprint **(35)** of the spinner tip **(20)**.

10. Device **(1)** according to Claim 8 or Claim 9, **characterized in that** the removable fixing system **(37)** comprises at least one primary magnet **(41)** borne by the ejector **(22)** and one secondary magnet **(42)** borne by the base **(10),** the primary magnet **(41)** and the secondary magnet **(42)** being, in the locked position, in line with one another with mutually attracting poles facing one another.

11. Device **(1)** according to one of Claims 8 to 10, **characterized in that** the removable fixing system **(37)** comprises at least one primary magnet **(41)** borne by the ejector **(22)** and one secondary magnet **(42)** borne by the base **(10),** the primary magnet **(41)** and the secondary magnet **(42)** being, in the unlocked position, in line with one another with mutually repelling poles facing one another.

12. Method, in a device **(1)** according to one of the preceding claims, of removing the spinner tip **(20)** from the spindle **(16),** which comprises the following operations:
- moving the ejector **(22)** from its working position to its tooling position to secure it in rotation with the spinner tip **(20);**
- imparting, to the ejector **(22),** a rotation to separate the spinner tip **(20)** from the spindle **(16)** at the bayonet mount **(21).**

13. Method according to Claim 12, **characterized in that** the operations are carried out by means of an automated manipulator.
